(19) Europäisches Patentamt
European Patent Office
Office européen des brevets

(11) **EP 4 386 060 A1**

(12) **EUROPEAN PATENT APPLICATION**

(43) Date of publication:
**19.06.2024 Bulletin 2024/25**

(21) Application number: **23216675.1**

(22) Date of filing: **14.12.2023**

(51) International Patent Classification (IPC):
***C09J 139/06*** (2006.01)   ***C09J 7/35*** (2018.01)

(52) Cooperative Patent Classification (CPC):
(C-Sets available)
**C09J 139/06; C09J 7/35; C09J 11/08;**
C08F 126/10; C09J 2203/334; C09J 2491/00

(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.12.2022   PT 2022118403**

(71) Applicant: **Colquimica-Indústria Nacional de
Colas, S.A.
4440-578 Valongo (PT)**

(72) Inventors:
• **Fernandes Frutuoso, Cristina Isabel
4450-150 Matosinhos (PT)**
• **Almeida Rocha, Sara Cristina
4580-865 Lordelo-Paredes (PT)**

(74) Representative: **Moniz Pereira, Manuel
Gastão da Cunha Ferreira, Lda.
Rua dos Bacalhoeiros 4
1100-070 Lisboa (PT)**

Remarks:
In accordance with Article 14(2), second sentence
EPC the applicant has filed a text with which it is
intended to bring the translation into conformity with
the original text of the application.

(54) **WASHABLE HOT-MELT ADHESIVE AND ITS PRODUCTION PROCESS**

(57)    The present invention refers to a washable hot melt adhesive and its production method for the container industry, particularly, but not exclusively, for labelling paper, polyethylene (PE), polypropylene (PP), polyvinyl chloride (PVC), namely but not exclusively, polyethylene terephthalate (PET), glass and cardboard containers. The composition of hot melt adhesive comprises a polymeric component selected from polyvinylpyrrolidone (PVP) and copolymers of vinylpyrrolidone and vinyl acetate (PVP/VA), a resin component, a plasticizer component, and an antioxidant component. The hot melt adhesive composition allows the substrates to be washed only with water during the recycling process, which allows labels to be easily removed without the need for friction, facilitating the recycling process of the materials on which the hot melt adhesive is applied.

EP 4 386 060 A1

(52) Cooperative Patent Classification (CPC): (Cont.)

C-Sets
**C09J 139/06, C08L 57/02, C08K 5/0016;**
**C09J 139/06, C08L 57/02, C08K 5/005;**
C08F 226/10, C08F 218/08

## Description

**Field of the invention**

The present invention refers to a hot melt adhesive composition, more particularly, a hot melt adhesive for the container industry, more specifically but not exclusively, for the labelling application in polyethylene terephthalate (PET) containers. The hot melt adhesive composition allows the substrates to be washed only with water, during the recycling process, which makes it easier to remove the label.

**Summary of the invention**

The present invention falls within the hot melt adhesives industry. Hot melt adhesives are products that are applied to the surface of a material in a molten state at high temperatures and harden when cooled to form a bond between at least two materials. Thereby, these products are supplied to in a solid state and later heated and applied in a liquid state. In general, the application temperature for this type of product varies between 100 and 200 °C.

Hot melt adhesives are used in a wide variety of industrial applications worldwide and can fulfil a wide range of complex requirements in the adhesive industry. In this context, among others, is the mattress industry. The hot melt adhesive market has seen exponential growth in recent decades due to the large-scale production of synthetic polymers. In addition to the economic advantages, these types of adhesives also do not include organic solvents in their composition, which makes them an option of choice due to the strong focus on sustainability that exists in this industry.

Currently, a hot melt adhesive considered standard for use in the container industry is selected considering the end application. In the case of container labelling, hot melt adhesives based on styrene block copolymers, also called pressure sensitive adhesives, are commonly used.

The present invention is an alternative to traditional hot melt adhesives used, particular but not exclusively, in the bonding of paper, polyethylene (PE), polypropylene (PP) and polyvinyl chloride (PVC) labels on polyethylene terephthalate (PET) and glass containers.

Waste recycling is a global issue and a concern across all industries. The recycling of the container materials, namely paper products and plastic containers is known and carried out all over the world.

Pressure sensitive adhesives, used in the label bonding, are usually hydrophobic and therefore are not easily removed from substrates, which makes the recycling process less effective. Therefore, to completely remove the adhesives, the substrates are immersed in an alkaline water-based solution at high temperatures. To do this, the adhesives must have specific properties to become softer, dissolve and disperse in this type of solution in a short period of time.

Identification of the technical problem

Sustainability is currently one of the main focuses of the hot melt adhesive industry due to growing concerns about the environmental degradation of our planet and its resources. A simple and effective method for reducing waste and resource exploitation is to recycle materials and extend their life cycle through reuse. However, the presence of the adhesive on the surface of a material can make the recycling process difficult, or even impossible, due to the presence of certain chemical components in its formulation.

**Background of the invention**

Typically, the formulation of a hot melt adhesive comprises the following types of raw materials:

- A polymeric component consisting at least one thermoplastic polymer capable of guaranteeing rheological properties suitable for its application. This component can be selected from polyolefins, ethylene vinyl acetate polymers, styrene block copolymers, among others;
- A resin component used to increase the adhesion force to substrates, which can be selected from natural or synthetic resins. Some examples of natural resins comprise rosin resins, tall oil resins, polyterpenoid phenolic or phenolic terpene resins. The synthetic hydrocarbon resin can be selected from aliphatic resins (C5), aromatic (C9), aliphatic/aromatic (C5/C9) and dicyclopentadiene (DCPD) resins;
- Additive components such as plasticizers or waxes that allow adjustment of the viscosity, softening point, and open time of the adhesive. A plasticizer can be selected from liquid polybutenes, saturated hydrocarbons, mineral oils, hydrogenated naphthenic or paraffinic oils and isobutylene-butene copolymer, among others. On the other hand, some examples of waxes include acrylic or modified acrylic or carboxylic acid, polyolefin, Fisher-Tropsch and paraffin copolymer;
- Additionally, other components can be added to the composition of the hot melt adhesive, namely but not exclusively, colouring agents or other additives.

Examples of pressure sensitive, removable and washable hot melt adhesives compositions are described in various patent documents, such as WO2014051160A1, CN106085351A, US4680333A and WO2008110685A1.

In the patent documents mentioned, the hot melt adhesives are removed using an aqueous caustic soda solution, at 80 °C. For this removal to be efficient, since caustic soda is a strong base, the hot melt adhesive needs to be acidic for it to dissolve. Despite being a method widely used in the recycling of various materials, it has numerous disadvantages. These include the energy costs resulting from the use of heating, as well as the risks associated with public health, since this component is a strong base at 80 °C.

In the state of the art, there are patent documents of pressure sensitive hot melt adhesives that are also washed using an alkaline solution, such as patent document JP2005220244A, which presents a styrene-based polymer base to which an isoprene-based liquid polymer is added to increase the cold resistance of the final product.

Patent documents US3763117A and CN106471078A refer to an acrylic-based hot melt adhesive that requires ultraviolet light curing processes.

As an alternative to this material wash process when the recycling process is occurring, adhesives with good dissolution in water, with no need to use caustic soda, are being developed.

The patent document JH07145361A describes the composition of a hot melt adhesive that, beyond its incorporation of styrene-based polymers, integrates hydroxypropyl cellulose, a cellulose derivative component that presents good solubility in water.

The document EP0385747A2 describes the composition of a hot melt adhesive which, in addition to incorporating styrene-based polymers, namely styrene-isoprene-styrene, incorporates Polyethyloxazoline (PEOX) plasticized with N,N-bis(2-hydroxyethyl)-dimethylhydantoin. However, it should be noted that styrene is quite non-polar, which makes it difficult for these formulations to be fully soluble in water.

Patent document EP0057421A1 describes the composition of pressure sensitive adhesive based on polyvinylpyrrolidone for use on labels. In addition to this polymeric component, the formulation comprises low percentages of polyamides and EVA polymers, which makes the productive process more complex.

In addition, it is known that starch-based and casein-based adhesives can only be removed with water. The advantages of starch-based adhesives are the availability of raw materials, low cost and non-toxicity. Nevertheless, there are disadvantages such as initial tackiness after applying the hot melt adhesive, as well as drying velocity. Casein-based adhesives have strong initial tackiness and good adhesion. However, they have a short lifetime, low availability in the market and long drying time, which leads to greater difficulty in application.

Solution for the technical problem

The hot melt adhesive of the present invention is washable only with water and has similar properties to styrene copolymer adhesives, as well as a strong initial tackiness and good processability during application. In addition, it is non-toxic and easily dissolved in water.

**Advantages of invention**

According to the present invention, the hot melt adhesive formulation/composition comprises only polyvinylpyrrolidone/ vinyl acetate copolymers (PVP/VA) as the polymeric base, and is easily washable with water at room temperature, without the need of the substrate's friction, being only necessary its immersion. Due to the adhesive's hydrophobic character, it reacts rapidly with water, dissolving and dispersing quickly in this solution, which facilitates the recycling process of the materials on which the hot melt adhesive is applied.

Typically, a hot melt adhesive formulation used in the container labelling comprises a resin component content of more than 40% by weight. Unexpectedly, with the hot melt adhesive formulation of the present invention, a strong initial tackiness of up to 20% by weight of the resin component was achieved.

Furthermore, the hot melt adhesive has good processability in different labelling materials, with a viscosity at 140 °C, between 500 and 3000 mPa·s, preferentially between 800 and 1500 mPa·s and a softening point between 50 and 120 °C, more preferentially between 55 and 90 °C.

Additionally, the hot melt adhesive of the present invention has a strong initial tackiness, environmental protection, a simple production process with low production costs and can be produced in the equipment of hot melt adhesive commonly used in the container industry.

The hot melt adhesive of the present invention, due to its strong initial tackiness, has additionally applicability in the gluing of containers, namely in the cardboard and plastic gluing.

**Detailed description of invention**

The object of the present invention is a washable hot melt adhesive formulation for use, namely but not exclusively, in gluing of paper, polyethylene (PE), polypropylene (PP), polyvinyl chloride (PVC) labels, in the container industry, namely but not exclusively, polyethylene terephthalate (PET), glass and cardboard containers.

"Substrates" means the material or surface of the material in which the hot melt adhesive washable with water is applied and/or directly contacts. In the present invention, the most common substrates are PET and glass containers, as well as plastic and paper labels.

"Container" means a recipient, jar, jug, vase, box, shape, casing, receptacle, reservoir, vessel, continent, package, pot, vessel, conceptacle, among others.

"Affinity with water", also designed by hydrophilicity, refers to the capacity of creating intermolecular bonds with water. This property, typical of polar molecules, determines the rate of attraction and interaction between different materials with water molecules.

"Polymeric base" means the polymeric materials that contribute to fundamental characteristics of the composition and form the foundation of the composition. Thus, the remaining components of the formulation have the function of modifying and/or improving the properties of the polymeric base.

"Initial tackiness" refers to the capacity of the hot melt adhesive penetrate into the substrate in which is applied and allow the efficient and permanent adhesion of a second substrate to the first one.

"Strong initial tackiness" refers to the resilience that the adhesive bonded substrates offer when separated, immediately after the application of the hot melt adhesive.

"Good processability during application" refers to suitable viscosity and softening point values, having in mind the labelling application. These properties must allow a continuous production, without the interruption caused by the poor application of the hot melt adhesive product.

"Good compatibility" refers to the total capacity of mixing the formulation components, where the adhesive seems to be homogeneous and fluid in the molten state.

"Suitable solubility" means a water solubility with values of more than 20%.

"Suitable viscosity" means the viscosity value at 140 °C, between 500 and 3000 mPa·s, preferably between 800 and 1500 mPa·s.

"Suitable softening point" means a softening point value comprised between 50 and 120 °C, preferably between 55 and 90 °C.

"ASTM" means the tests carried out in accordance with the standards of to the American Society for Testing and Materials.

According to the invention, the hot melt adhesive formulation comprises:

- a polymeric component comprising at least one water-sensitive thermoplastic polymer;
- a resin component comprising at least one resin with high acid content;
- a plasticizer component comprising at least one plasticizer capable of forming a homogeneous mixture with the polymeric base and control rheologic properties such as viscosity;
- an antioxidant component comprising at least one phenolic antioxidant.

Polymeric component

The polymeric component of the hot melt adhesive of the present invention comprises a polymeric water-sensitive thermoplastic component, i.e., soluble or partially soluble, or with water affinity. The water-sensitive polymers suitable for the hot melt adhesive of present invention are selected, namely but not exclusively, from: polyvinylpyrrolidone (PVP) and polyvinylpyrrolidone/ vinyl acetate copolymers (PVP/VA).

The polymeric component content should be up to 70% by weight of the hot melt adhesive, preferably between 20% and 60%, more preferably between 20% and 55% by weight.

Resin component

The resin component guarantees adequate adhesion to the materials used, namely but not exclusively, to the cardboard and plastic-based products such as PET, PP and PE. This component is selected from natural and synthetic resins.

In the case of natural resin, this resin is selected, namely but not exclusively, from: rosin glycerol ester, rosin pentaerythritol ester, rosin triethylene glycol ester, rosin methyl ester, rosin ester partially or completely hydrogenated resin, tall oil resin, glycerol ester of tall oil, pentaerythritol ester of tall oil, methanol ester of tall oil, polyterpene resin or phenolic terpene resin, preferably rosin resins, more preferably hydrogenated rosin resins.

In the case of synthetic resin, this resin is selected, namely but not exclusively, between pure monomers or hydrocarbon resins. The hydrocarbon resin is selected, namely but not exclusively, from: aliphatic resins C5, aromatic resins C9, aliphatic/aromatic resins C5/C9, and dicyclopentadiene (DCPD), preferably aromatic resins C9, more preferably hydrogenated aromatic C9 and hydrogenated dicyclopentadiene (DCPD).

The resin component content should be up to 30% by weight of the hot melt adhesive, more preferably should be up to 20% by weight, even more preferably between 5% and 15% by weight.

Plasticizer component

The use of the plasticizer component allows the adjustment of the viscosity and softening point of the hot melt adhesive to values considered to be suitable, to facilitate the application in industrial lines.

"Suitable viscosity" is understood as a viscosity value at 140 °C between 500 and 3 000 mPa·s, preferably between 800 and 1 500 mPa·s measured according to ASTM D3236.

"Suitable softening point" is meant a softening point value comprised between 50 and 120 °C, preferably between 55 and 90 °C measured according to ASTM E28.

By ensuring that the composition has the suitable values for these properties, it is also ensured that the application temperature necessary when using the hot melt adhesive of the invention in industrial lines is adequate and that it must be between 100 and 200 °C, preferentially between 100 and 160 °C, more preferentially between 120 and 140 °C.

For this reason, the hot melt adhesive of this invention comprising a plasticizer component comprising at least one liquid plasticizer at room temperature, selected, namely but not exclusively, from liquid polymers, saturated hydrocarbons, mineral oils, hydrogenated naphthenic oils, paraffinic oils, isobutylene-butene copolymer, preferably saturated or unsaturated fatty acids, more preferably dimer or polymerized fatty acids or fatty acids derivatives.

The plasticizer component content should be up to 50% by weight of the hot melt adhesive, preferably between 10% and 50% by weight, more preferably between 20% and 40%.

Antioxidant component

The antioxidant component in the formulation has the main goal of avoiding the hot melt adhesive heating degradation, during its production, application, or final product storage. For the present invention, the antioxidant component consisting of at least one primary, secondary, or multifunctional antioxidant is particularly useful.

Thus, the antioxidant component is selected, namely but not exclusively, from: phenolic antioxidants, phosphite antioxidants, thioesters-based antioxidants, or mixtures thereof.

The content of the antioxidant component for the present invention corresponds to up to 5% by weight of the hot melt adhesive, preferably between 0,1% and 40, and more preferably between 0,2% and 20, even more preferably between 0,5% and 1,5% by weight.

Production method

The method for production washable hot melt adhesive comprises the following steps:

a) Mix half the amount of polymeric component with the plasticizer component at room temperature until a homogeneous mixture is formed;
b) Heat the mixture obtained in step a) to 135 °C, with constant stirring and add the other half of the amount of the polymeric component, until the mixture has a translucent appearance;
c) Add the resin component and the antioxidant component while stirring until all components are properly incorporated.

Embodiments of the invention

To verify the results obtained of the hot melt adhesive of the present invention, as well as to compare it with a standard hot melt adhesive used in labelling applications, several tests were performed, and their results are shown in Table 1.

This invention is further illustrated by the following nonlimiting examples.

As will be clear to a skilled person, the application of the principles described herein is not limited to the embodiments presented.

In Example 1 shows the information regarding the composition of a standard hot melt adhesive used in the labelling applications of styrene-based labels. This formulation has good compatibility and a viscosity at 140 °C and softening point suitable for the application. However, this formulation is not water soluble.

In Example 2 shows a hot melt adhesive with PVP/VA as the polymer component added to a rosin resin. This formulation has good compatibility, water solubility above 20%, but a viscosity at 140 °C of 3 200 mPa·s, which is too high for labelling application.

Example 3 shows a formulation comprising a polymeric component based on PVP/VA added to a hydrocarbon resin with good compatibility, suitable viscosity for the application, but a water solubility of less than 20% and is therefore not considered adequate.

Example 4 shows information on a hot melt adhesive composition comprising a PVP/VA-based polymer component mixed with a pure monomer resin. This composition does not present good compatibility, which means the mixture is not homogeneous. For this reason, viscosity at 140 °C, softening point and water solubility were not evaluated in this formulation.

Finally, Example 5 relates to a hot melt adhesive composition with PVP/VA as the polymer component and a hydrogenated rosin resin with a viscosity at 140 °C and a softening point suitable for the application, good compatibility between raw materials and a water solubility of 32%.

Many modifications and variations of this invention can be made without departing from its spirit and scope, as will be apparent to those skilled in the art. The specific embodiments described herein are offered by way of example only, and the invention is to be limited only by the terms of the appended claims, along with the full scope of equivalents to which such claims are entitled.

Table 1

|  | Example 1 | Example 2 | Example 3 | Example 4 | Example 5 |
|---|---|---|---|---|---|
| Resin component 1A | 35,5% | - | - | - | - |
| Resin component 2B | 23,5% | - | - | - | - |
| Resin component 3C | - | 10,0% | - | - | - |
| Resin component 4D | - | - | 10,0% | - | - |
| Resin component 5E |  |  |  | 10,0% | - |
| Resin component 6F |  |  |  | - | 10, 0% |
| Antioxidant component G | 1, 0% | 1,0% | 1,0% | 1,0% | 1,0% |
| Plasticizer component 1H | 6, 0% | - | - | - | - |
| Plasticizer component 2I | 20,0% | - | - | - | - |
| Plasticizer component 3J | - | 35,0% | 35,0% | 35,0% | 35,0% |
| Polymeric component 1K | 10, 0% | - | - | - | - |
| Polymeric component 2L | 4, 0% | - | - | - | - |
| Polymeric component 3M | - | 54, 0% | 14,0% | 14, 0% | 14, 0% |
| Polymeric component 4N | - | - | 40,0% | 40,0% | 40, 0% |
| Viscosity at 140 °C #1 | 1 000 mPa·s | 3 200 mPa·s | 1 420 mPa·s | - | 1 370 mPa·s |
| Softening Point #2 | 60 °C | 58 °C | 61 °C | - | 59 °C |
| Compatibility #3 | Compatible | Compatible | Compatible | Not compatible | Compatible |
| $H_2O$ solubility #4 | 0% | 26% | 19% | - | 32% |

Captions:

A - Tall oil-based resin component.
B - Hydrocarbon resin component with a softening point of 80 °C.
C - Rosin resin component.
D - Hydrocarbon resin component with a softening point of 100 °C.
E - Pure monomer resin.
F - Hydrogenated rosin ester with high acid value.

G - Antioxidant commonly used in hot melt adhesives.
H - Plasticizer typically used in labelling hot melt adhesives, with a flash point of 212 °C, according to ASTM D92.
I - Plasticizer typically used in labelling hot melt adhesives, with a flash point of 240 °C, according to ASTM D92.
J - Plasticizer soluble in PVP/VA polymers.
K - Styrene block copolymer resin with a melt flow index measured at 200 °C/ 5 kg between 8 and 15 g/ 10 min.
L - Styrene block copolymer resin with a melt flow index measured at 200 °C/ 5 kg between 20 and 30 g/ 10 min.
M - PVP/VA based polymer with water affinity and a K value (1% water) between 26 and 34 measured according to Fikentscher.
N - PVP/VA based polymer with water affinity and a K value (1% water) between 37 and 45 measured according to Fikentscher.

In practice, the average molecular weight of the PVP/VA based polymer is preferably indicated by the K value according to Fikentscher, which can be determined relatively easily by measuring the viscosity of the corresponding diluted polymer solutions.

The K value is calculated from the relative viscosity $\eta r$ using the Fikentscher equation:

$$K = 1000.\text{k} = 1000.\frac{1,5\lg\eta_r - 1 \pm \sqrt{1 + \left(\frac{2}{c} + 2 + 1,5 lg\eta_r\right).1,5\lg\eta_r}}{150 - 300\text{c}}$$

where: $\eta_r$ = dynamic viscosity of the solution/dynamic viscosity of the solvent c = mass concentration of polymer in the solution in g/cm$^3$

The K value according to Fikentscher therefore represents a measure of the viscosity-average molecular weight.

#1 - Test method: Brookfield, Sistema de Termosel, ASTM D3236.
#2 - Test method: Ring & ball, ASTM E28.
#3 - Test method: compatibility is evaluated with a visual method when the adhesive is in the molten state. The mixture should be homogeneous, fluid, without phase separation.
#4 - The method to determine water solubility of the hot melt adhesive presented this invention comprises the following steps:

1) Cut three PET samples with 80 mm and 25 mm width and wash them with distilled water. Dry the samples during 4 hours at 50 °C and then, weight the samples designated by A1, A2 and A3;
2) Heat the adhesive and a k-bar of 100 um at 140 °C and then laminate the adhesive using the k-bar on the PET samples;
3) Weight each of the coated samples designated by B1, B2 and B3;
4) After 24 hours, soak the samples in a beaker with 500 ml of water at room temperature for 2 minutes;
5) Dry the samples at 50 °C for 4 hours;
6) Weight the three samples designated by C1, C2 and C3;
7) Determine the average solubility of the three samples using the formula:

```
Solubility % = (B1 - C1) - (B1 - A1) × 100
```

Solubility above 20% is considered acceptable.

## Claims

1. Washable hot melt adhesive comprising a polymeric component, a resin component, a plasticizer component and an antioxidant component **characterised by** comprising the polymeric component between 20 and 60% by weight of the hot melt adhesive and polymeric component is selected from polyvinylpyrrolidone (PVP) and copolymers of vinylpyrrolidone and vinyl acetate (PVP/VA), between 5% and 15% by weight of the resin component, between 10% and 50% by weight of the plasticizer component and between 0,1% and 4% by weight of the antioxidant component.

2. Washable hot melt adhesive according to the previous claim, wherein the polymeric component is a PVP/VA based polymer with water affinity and a K value (1% water) between 26 and 34 measured according to Fikentscher and PVP/VA based polymer with water affinity and a K value (1% water) between 37 and 45 measured according to Fikentscher.

3. Washable hot melt adhesive according to any one of the previous claims, wherein the resin component is a natural or synthetic resin.

4. Washable hot melt adhesive according to the previous claim, wherein the natural resin is selected from rosin glycerol ester, rosin pentaerythritol ester, rosin triethylene glycol ester, rosin methyl ester, rosin ester partially or completely hydrogenated resin, tall oil resin, glycerol ester of tall oil, pentaerythritol ester of tall oil, methanol ester of tall oil, polyterpene resin or phenolic terpene resin, rosin resins and hydrogenated rosin resins.

5. Washable hot melt adhesive according to the claim 3, wherein synthetic resin is selected from pure monomer resin or hydrocarbon resin.

6. Washable hot melt adhesive according to the previous claim, wherein the hydrocarbon resin is selected from: aliphatic resins C5, aromatic resins C9, aliphatic/aromatic resins C5/C9, dicyclopentadiene (DCPD), aromatic resins C9, hydrogenated aromatic C9 and hydrogenated dicyclopentadiene (DCPD).

7. Washable hot melt adhesive according to any one of the previous claims, wherein the plasticizer component is at least one liquid plasticizer at room temperature, selected from: liquid polymers, saturated hydrocarbons, mineral oils, hydrogenated naphthenic oils, paraffinic oils, isobutylene-butene copolymer, saturated or unsaturated fatty acids, dimer or polymerized fatty acids or fatty acids derivatives.

8. Washable hot melt adhesive according to any one of the previous claims, wherein the antioxidant component is selected from: phenolic antioxidants, phosphite antioxidants, thioesters-based antioxidants or mixtures thereof.

9. Washable hot melt adhesive according to any one of the previous claims, wherein the viscosity at 140 °C is comprised between 500 and 3 000 mPa·s measured according to ASTM D3236 and the softening point is comprised between 50 °C and 120 °C measured according to ASTM E28.

10. Process for producing the washable hot melt adhesive claimed in the preceding claims, **characterized in that** it comprises the following steps:

   a) Mix half the amount of polymeric component with the plasticizer component at room temperature until a homogeneous mixture is formed;
   b) Heat the mixture obtained in step a) to 135 °C, with constant stirring and add the other half of the amount of the polymeric component, until the mixture has a translucent appearance;
   c) Add the resin component and the antioxidant component while stirring until all components are properly incorporated.

11. Use of the washable hot melt adhesive claimed in any claims 1 to 9 in container industry.

12. Use of the washable hot melt adhesive according to claim 11 for labelling paper, polyethylene (PE), polypropylene (PP) and polyvinylchloride (PVC) labels.

13. Use of the washable hot melt adhesive according to claim 11 in polyethylene terephthalate (PET), glass and cardboard containers.

14. Use of the washable hot melt adhesive according to claim 11 for labelling cardboard to plastic.

**Amended claims in accordance with Rule 137(2) EPC.**

1. Washable hot melt adhesive comprising a polymeric component, a resin component, a plasticizer component and an antioxidant component **characterised by** comprising the polymeric component between 20 and 60% by weight of the hot melt adhesive and polymeric component is selected from polyvinylpyrrolidone (PVP) and copolymers of vinylpyrrolidone and vinyl acetate (PVP/VA), between 5% and 15% by weight of the resin component, between 10% and 50% by weight of the plasticizer component and between 0,1% and 4% by weight of the antioxidant component.

2. Washable hot melt adhesive according to the previous claim, wherein the polymeric component is a PVP/VA based polymer with water affinity and a K value (1% water) between 26 and 34 measured according to Fikentscher and PVP/VA based polymer with water affinity and a K value (1% water) between 37 and 45 measured according to Fikentscher.

3. Washable hot melt adhesive according to any one of the previous claims, wherein the resin component is a natural or synthetic resin.

4. Washable hot melt adhesive according to the previous claim, wherein the natural resin is selected from rosin glycerol ester, rosin pentaerythritol ester, rosin triethylene glycol ester, rosin methyl ester, rosin ester partially or completely hydrogenated resin, tall oil resin, glycerol ester of tall oil, pentaerythritol ester of tall oil, methanol ester of tall oil, polyterpene resin or phenolic terpene resin, rosin resins and hydrogenated rosin resins.

5. Washable hot melt adhesive according to the claim 3, wherein synthetic resin is selected from pure monomer resin or hydrocarbon resin.

6. Washable hot melt adhesive according to the previous claim, wherein the hydrocarbon resin is selected from: aliphatic resins C5, aromatic resins C9, aliphatic/aromatic resins C5/C9, dicyclopentadiene (DCPD), aromatic resins C9, hydrogenated aromatic C9 and hydrogenated dicyclopentadiene (DCPD).

7. Washable hot melt adhesive according to any one of the previous claims, wherein the plasticizer component is at least one liquid plasticizer at room temperature, selected from: liquid polymers, saturated hydrocarbons, mineral oils, hydrogenated naphthenic oils, paraffinic oils, isobutylene-butene copolymer, saturated or unsaturated fatty acids, dimer or polymerized fatty acids or fatty acids derivatives.

8. Washable hot melt adhesive according to any one of the previous claims, wherein the antioxidant component is selected from: phenolic antioxidants, phosphite antioxidants, thioesters-based antioxidants or mixtures thereof.

9. Washable hot melt adhesive according to any one of the previous claims, wherein the viscosity at 140 °C is comprised between 500 and 3 000 mPa·s measured according to ASTM D3236.

10. Washable hot melt adhesive according to any one of the previous claims, wherein the softening point is comprised between 50 °C and 120 °C measured according to ASTM E28.

11. Process for producing the washable hot melt adhesive claimed in the preceding claims, **characterized in that** it comprises the following steps:

a) Mix half the amount of polymeric component with the plasticizer component at room temperature until a homogeneous mixture is formed;
b) Heat the mixture obtained in step a) to 135 °C, with constant stirring and add the other half of the amount of the polymeric component, until the mixture has a translucent appearance;
c) Add the resin component and the antioxidant component while stirring until all components are properly incorporated.

12. Use of the washable hot melt adhesive claimed in any claims 1 to 10 in container industry.

13. Use of the washable hot melt adhesive according to claim 12 for labelling paper, polyethylene (PE), polypropylene (PP) and polyvinylchloride (PVC) labels.

14. Use of the washable hot melt adhesive according to claim 12 in polyethylene terephthalate (PET), glass and cardboard containers.

15. Use of the washable hot melt adhesive according to claim 12 for labelling cardboard to plastic.

Europäisches
Patentamt

European
Patent Office

Office européen
des brevets

# EUROPEAN SEARCH REPORT

**Application Number**

**EP 23 21 6675**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 182 323 A (RUSSELL GARY S [GB]) 26 January 1993 (1993-01-26) * claim 1 * * example 1 * * column 3, line 50 - line 56 * * column 2, line 13 - line 15 * * column 2, line 24 - line 25 * * column 3, line 10 - line 11 * ----- | 1,2,5,6, 8,12 | INV. C09J139/06 C09J7/35 |
| X | US 4 325 851 A (COLON HERMAN ET AL) 20 April 1982 (1982-04-20) * claim 1 * * example 6 * ----- | 1,3,4,7, 8 | |
| X | US 4 331 576 A (COLON HERMAN ET AL) 25 May 1982 (1982-05-25) * claim 1 * * column 2, line 9 - line 10 * * example 5 * * column 3, line 3 - line 4 * * column 5, line 13 - line 19 * * column 2, line 17 - line 23 * ----- | 1,3,7,8, 11-14 | |
| | | | TECHNICAL FIELDS SEARCHED (IPC) |
| | | | C09J |
| A | WO 2022/229920 A1 (COLQUIMICA INDUSTRIA NAC DE COLAS S A [PT]) 3 November 2022 (2022-11-03) * claims 1,4,10 * ----- | 1-14 | |

The present search report has been drawn up for all claims

| Place of search | Date of completion of the search | Examiner |
|---|---|---|
| The Hague | 2 May 2024 | Flores de Paco, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 6675

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2024

| Patent document cited in search report | | Publication date | Patent family member(s) | | Publication date |
|---|---|---|---|---|---|
| US 5182323 | A | 26-01-1993 | AU | 656980 B2 | 23-02-1995 |
| | | | CA | 2107784 A1 | 29-11-1992 |
| | | | DE | 69208658 T2 | 22-08-1996 |
| | | | EP | 0586478 A1 | 16-03-1994 |
| | | | JP | H06508165 A | 14-09-1994 |
| | | | US | 5182323 A | 26-01-1993 |
| | | | WO | 9221718 A1 | 10-12-1992 |
| US 4325851 | A | 20-04-1982 | AT | E13311 T1 | 15-06-1985 |
| | | | EP | 0050862 A1 | 05-05-1982 |
| | | | US | 4325851 A | 20-04-1982 |
| US 4331576 | A | 25-05-1982 | EP | 0057421 A1 | 11-08-1982 |
| | | | US | 4331576 A | 25-05-1982 |
| WO 2022229920 | A1 | 03-11-2022 | BR | 112023021845 A2 | 19-12-2023 |
| | | | CA | 3215322 A1 | 03-11-2022 |
| | | | EP | 4301424 A1 | 10-01-2024 |
| | | | PT | 117210 A | 31-10-2022 |
| | | | US | 2024050620 A1 | 15-02-2024 |
| | | | WO | 2022229920 A1 | 03-11-2022 |

EPO FORM P0459

For more details about this annex : see Official Journal of the European Patent Office, No. 12/82

EP 4 386 060 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014051160 A1
- CN 106085351 A
- US 4680333 A
- WO 2008110685 A1
- JP 2005220244 A
- US 3763117 A
- CN 106471078 A
- WO 07145361 A
- EP 0385747 A2
- EP 0057421 A1